# EUROPEAN PATENT SPECIFICATION

(11) **EP 3 048 689 B1**
(45) Date of publication and mention of the grant of the patent: **21.03.2018**
(21) Application number: 16152387.3
(22) Date of filing: 22.01.2016
(51) Int. Cl.: H02J 3/36

(54) **DIRECT CURRENT POWER SYSTEM**
GLEICHSTROMSYSTEM
SYSTÈME D'ALIMENTATION EN COURANT CONTINU

(30) Priority: 23.01.2015 US 201514603843
(43) Date of publication of application: 27.07.2016
(73) Proprietor: General Electric Company, Schenectady, NY 12345 (US)
(72) Inventor: SIHLER, Christof Martin, Niskayuna, NY New York 12309 (US); TENCA, Pierluigi, Niskayuna, NY New York 12309 (US)
(74) Representative: Serjeants LLP

(56) References cited:
- US-A- 5 550 410
- US-A1- 2013 342 139

## Description

### BACKGROUND

The invention relates generally to power transmission and more specifically to a system and method for transmitting direct current electrical power to marine or subsea electrical equipment.

In the last few decades, the field of power conversion has grown tremendously due to its imminent advantages in motor drives, renewable energy systems, high voltage direct current (HVDC) systems, and the like. For example, a subsea oil and gas production system which requires hundreds of megawatts of electric power may employ a HVDC transmission and distribution system for delivery of electric power. Furthermore, marine traffic has recently increased substantially across the world due to the tremendous rise in cargo transport vessels, warships, offshore oil ships, passenger ships etc. These vessels or ships have many electrical loads on board. Variable speed electric drives for pumps, fans, electric propulsion installations, lighting and air conditioning are some examples of the electrical loads on board of a ship.

Often subsea and marine power supply circuit arrangements include a direct current (DC) power system including a DC bus to which a plurality of power converters and a plurality of loads are connected. Power converters supply energy to the plurality of loads via the common DC bus. The common DC bus also includes a plurality of capacitors. Such a power system poses significant protection problems due to a large number of subsystems in the circuit. The protection problems are exacerbated by the subsea environment and the customer requests of system availability for several years without maintenance. It is therefore necessary to design the overall set of subsystems connected to the common DC bus in a way that limits the damages when even just one of the subsystem fails because of a short-circuit fault. The main problem is discharge of large quantity of energy accumulated in the capacitors that are connected to the common DC bus.

Utilizing DC circuit breakers for interrupting the DC fault current is one of the solutions to the above protection problem. Another solution is to use overdesigned sub-systems so that they can withstand the energy discharged by the capacitors during the fault. However, these solutions involve costly and bulky components which further involve problems such as space constraints.

Therefore, there still exists a need for a compact and a reliable system for transmitting electric power to subsea or marine equipment.

US 5550410 discloses a DC power system including:
- a common DC bus including at least a positive rail configured to supply power to a plurality of AC loads, and
- a plurality of AC/DC converter bridges supplying DC power to the common DC bus, wherein each of the AC/DC converter bridges is connected to the common DC bus by a respective DC link, i.e., DC links connected in parallel to the common DC bus,
- wherein each DC link includes at least one diode to block an instantaneous current flow from the common DC bus to the respective AC/DC converter bridge in case of a fault in the AC/DC converter bridge.

US 2013/0342139 discloses a power converting device.

### BRIEF DESCRIPTION

The present invention provides a direct current (DC) power system according to claim 1 and a method of supplying DC power according to claim 6. Because the capacitance value of the second capacitor is more than 10 times the capacitance value of the first capacitor, the first capacitor is referred to below as the "small capacitor" and the second capacitor is referred to below as the "large capacitor". The capacitance value of the first capacitor can be selected so as to allow just sufficient flow of a normal mode instantaneous current in the respective AC/DC converter bridge without extreme voltage decay at the output terminals of the AC/DC converter bridge during normal operation of the AC/DC converter bridge.

### DRAWINGS

FIG. 1 is a diagrammatical representation of a prior art DC power system for a marine or subsea equipment;
FIG. 2 is a schematic diagram illustrating a DC power system, according to aspects of the present disclosure;
FIG. 3 is a schematic diagram illustrating AC to DC power converter bridges of FIG. 2, according to aspects of the present disclosure;
FIG. 4 is a graphical diagram illustrating simulation plots of the subsea power transmission/distribution system of FIG. 2 in accordance with an embodiment of the present technique; and
FIG. 5 is a schematic diagram illustrating another DC power system, according to aspects of the present disclosure.

### DETAILED DESCRIPTION

Unless defined otherwise, technical and scientific terms used herein have the same meaning as is commonly understood by one of ordinary skill in the art to which this disclosure belongs. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced items. The term "or" is meant to be inclusive and mean one, some, or all of the listed items. The use of "including," "comprising" or "having" and variations thereof herein are meant to encompass the items listed thereafter and equivalents thereof as well as additional items. Furthermore, the terms "circuit" and "circuitry" and "controller" may include either a single component or a plurality of components, which are either active and/or passive and are connected or otherwise coupled together to provide the described function.

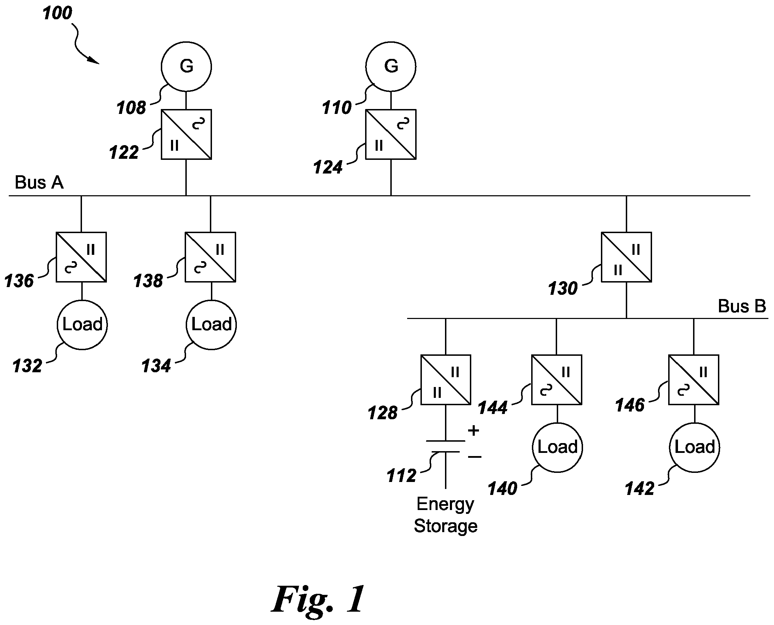

Turning now to the drawings, by way of example in FIG. 1, a prior art DC power system 100 for a marine or subsea equipment is depicted. The DC power system 100 includes energy sources such as alternating current (AC) generators 108, 110 which feed power to a first DC bus (labelled "Bus A") via power electronic converters 122 and 124 respectively. In one embodiment, for example for a subsea system, the DC power system 100 may receive energy from a power grid (not shown) via a transmission line (not shown). In the embodiment shown, the DC power system 100 also includes an energy storage device 112 which feeds power to a second DC bus (labelled "Bus B") via a power electronic converter 128. Power electronic converters 122, 124 are AC/DC converters as they have to convert power from AC generators to the first DC bus whereas the power electronic converter 128 is a DC/DC converter as it couples a DC energy storage device to the second DC bus. The first and second DC buses do not have same DC voltage and hence are coupled to each other via a DC/DC converter 130. The DC/DC converter 130 may be a bidirectional DC/DC converter or a unidirectional DC/DC converter. Further, loads 132 and 134 are connected to the first DC bus via power electronic converters 136 and 138 respectively and loads 140 and 142 are connected to the second DC bus via power electronic converters 144 and 146 respectively. Depending on whether the load is an AC load or a DC load, power electronic converter 136, 138, 144 and 146 may be AC/DC converters or DC/DC converters. The DC power system 100 may also include a controller (not shown) to control the various converters.

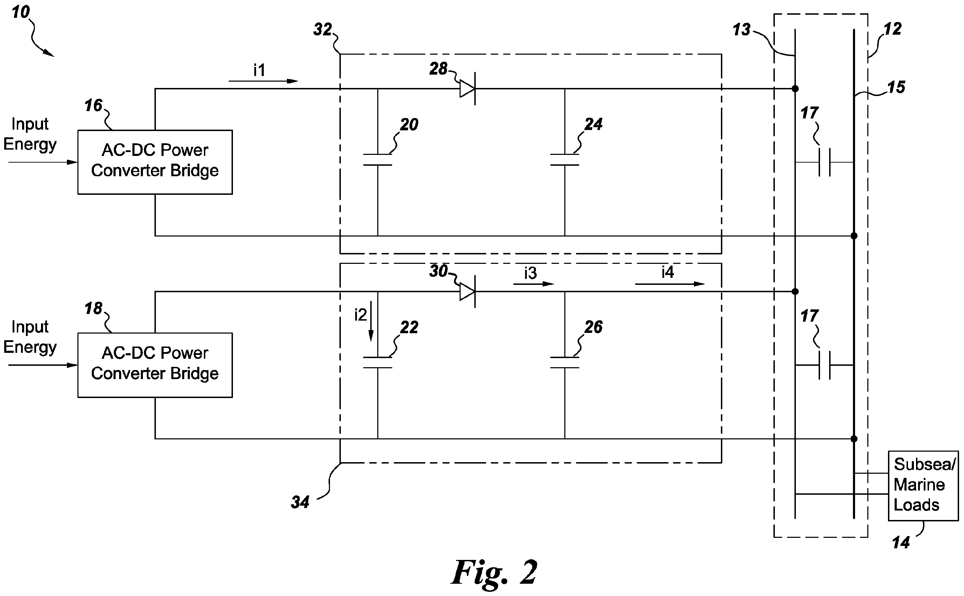

FIG. 2 illustrates a schematic diagram of a DC power system 10 in accordance with aspects of the present disclosure. The DC power system 10 includes a common DC bus 12 to which a plurality of loads 14 are connected (only one load is shown in FIG. 2 for convenience). The DC bus 12 includes a positive rail 13 and a negative rail 15 to which a plurality of DC capacitors 17 may be connected. It should be noted that in some embodiments, the negative rail may be replaced with a ground rail. As discussed earlier, the DC bus 12 may receive energy from energy sources such as local generators, batteries or a power grid, for example. Power grid and local generators are generally AC energy sources although DC generators may also be used. Therefore, the DC power system 10 further includes a plurality of AC/DC power converter bridges 16, 18. The AC/DC power converter bridges 16, 18 may be single phase bridges or three phase bridges, for example. When the AC/DC power converter bridges 16, 18 are single phase bridges, they include two converter legs whereas when the AC/DC power converter bridges are three phase bridges, they include three converter legs. In practice, the AC power supplied to the AC/DC power converter bridges 16, 18 can have any suitable number of phases and the AC/DC power converter bridges will have a suitable number of converter legs.

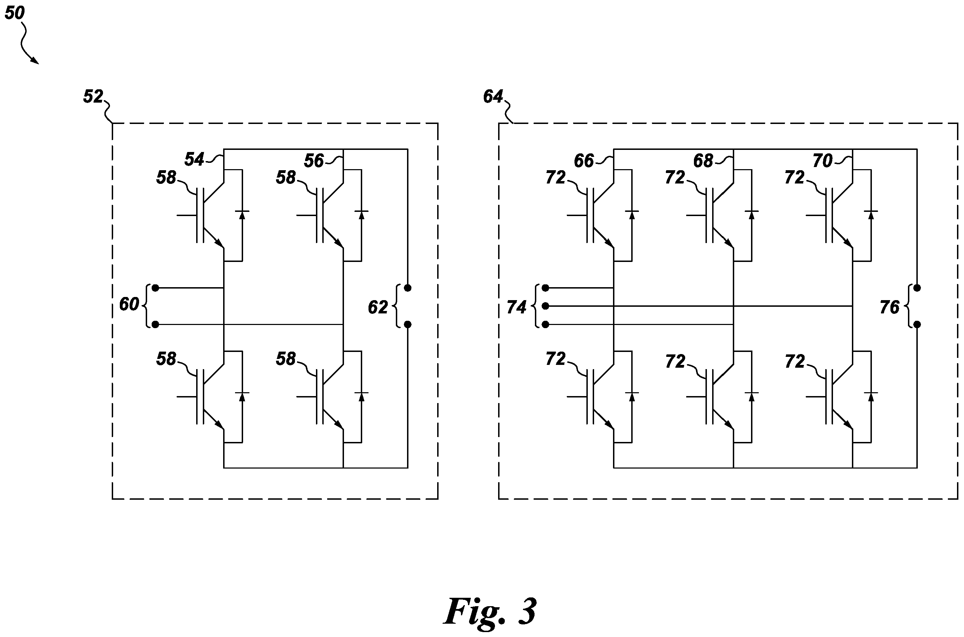

FIG. 3 shows a schematic diagram 50 of examples of the AC/DC power converter bridges in accordance with an embodiment of the present technique that can be utilized in the DC power system 10. An AC/DC power converter bridge 52 is an example of a single phase AC/DC power converter bridge and includes two converter legs 54 and 56. Each of the converter legs includes a plurality of controllable semiconductor switches 58. An input single phase AC supply may be provided to the AC/DC power converter bridge 52 at terminals 60 and an output DC supply may be taken at terminals 62.

An AC/DC power converter bridge 64 is an example of a three phase AC/DC power converter and includes three converter legs 66, 68 and 70. Each of the converter legs includes a plurality of controllable semiconductor switches 72. An input three phase AC supply may be provided to the AC/DC power converter bridge 64 at terminals 74 and an output DC supply may be taken at terminals 76.

In both of the AC/DC power converter bridges 52 and 64, the controllable semiconductor switches 58 and 72 are switched on and off at a switching frequency and thus, they convert AC power into DC power (or in some cases converter DC power into AC power). It should be noted that AC/DC power converter bridges 52 and 64 are only two examples of AC/DC power converter bridges that can be utilized in the DC power system 10 (i.e., as AC/DC power converter bridges 16, 18). In other embodiments, the AC/DC power converter bridges 16, 18 may have other structures, such as a multilevel converter bridge or simply a diode bridge.

Referring back to FIG. 2, the AC/DC power converter bridges 16, 18 are respectively connected to the common DC bus 12 by means of split DC links 32 and 34. The split DC links 32, 34 include small capacitors 20, 22 which are connected at the output terminals of AC/DC power converter bridges 16, 18 respectively. Furthermore, the split DC links 32, 34 include large capacitors 24, 26 which are connected across the common DC link 12. As explained above, the large capacitors 24, 26 have a larger capacitance value than the small capacitors 20, 22. The large capacitors 24, 26 are coupled to the AC/DC power converter bridges 16, 18 via uncontrolled semiconductor switches such as diodes 28, 30 respectively. In other words, the split DC link 32, 34 that connects each AC/DC power converter bridges 16, 18 to the common DC bus 12 is divided or split into a small capacitor 20, 22 and a large capacitor 24, 26. Further, each small capacitor 20, 22 and each large capacitor 24, 26 are coupled by at least one diode 28, 30. The large capacitors 24, 26 are connected in parallel to the common DC bus 12 as shown in FIG. 2. The diodes 28, 30 allow current to be transmitted from each AC/DC power converter bridge 16, 18 to the common DC bus 12. However, they block reversal of current i.e., a current flow from the common DC bus 12 to the AC/DC power converter bridges 16, 18 is blocked by the diodes 28, 30. In the embodiment shown, the diodes 28, 30 are connected such that their anodes are connected to the respective AC/DC power converter bridge 16, 18 and their cathodes are connected to the DC bus 12. FIG. 2 shows that each split DC link 32, 34 includes a positive rail that is connected between one of the output terminals of the respective AC/DC power converter bridge 16, 18 and the positive rail 13 of the DC bus 12, and a negative rail that is connected between the other one of the output terminals of the respective AC/DC power converter bridge 16, 18 and the negative rail 15 of the DC bus 12. The split DC links 32, 34 are connected to the DC bus 12 in parallel. The small capacitors 20, 22 and the large capacitors 24, 26 are coupled between the positive and negative rails.

In case of a short circuit fault on the AC/DC power converter bridge 16, for example, the diode 28 blocks reversal of power flow from the common DC bus 12 to the AC/DC power converter bridge 16. This results in two things. First, damage to the AC/DC power converter bridge 16 due to dumping of energy from the common DC bus 12 into the AC/DC power converter bridge 16 is avoided. Second, the AC/DC power converter bridge 16 is isolated from the common DC bus 12, which results in continuity of operation of rest of the DC power system. The diode 28 facilitates isolation of the AC/DC power converter bridge 16 from the DC bus 12 without the need for any controllable switching device. Similarly, in case of a short circuit fault on the AC/DC power converter bridge 18, the diode 30 isolates the AC/DC power converter bridge 18 from the common DC bus 12. It should be noted that only two AC/DC power converter bridges are shown in FIG. 2 for ease of explanation. However, any number of AC/DC power converter bridges may be coupled to the DC bus 12 and for every such AC/DC power converter bridge a split DC link with at least one diode may be employed to isolate it from the DC bus 12. The at least one diode in each split DC link will block an instantaneous current flow from the common DC bus 12 to the respective AC/DC power converter bridge in case of a fault.

The small capacitors 20, 22 facilitate a negative DC current in case of a fault on the AC/DC power converter bridges 16, 18 and thus, the small capacitors 20, 22 protect the AC/DC power converter bridges 16, 18 from extreme voltage decay at the output terminals. The small capacitors 20, 22 are mounted very close to the phase legs of the AC/DC power converter bridges 16, 18, and by allowing the negative current flow, they continue to assure that each AC/DC power converter bridge 16, 18 observes a linear voltage source formed by the small capacitors 20, 22 for limited time intervals. The average power flow between the AC/DC power converter bridges 16, 18 and the common DC bus 12 has only one sign i.e., the average power is transferred from the AC/DC power converter bridges 16, 18 to the common DC bus 12. In other words, the average values of the currents from the phase legs of the AC/DC power converter bridges 16, 18 are compatible with the polarity of diodes 28, 30 and this means that the currents from the phase legs of the AC/DC power converter bridges flow into the diodes 28, 30 for the majority of the period, thereby connecting the large capacitors 24, 26 to the small capacitors 20, 22. For most of the period, when diodes 28, 30 conduct, the common DC bus 12 behaves as the usual approximation of a linear voltage source. It is only when the currents from the phase legs of the AC/DC power converter bridges 16, 18 are negative that the diodes 28, 30 do not conduct and then the small capacitors 20, 22 allow such currents. In case of a fault on one of the AC/DC power converter bridges 16, 18, the respective small capacitor 20, 22 abruptly discharges energy into the faulty AC/DC power converter bridge 16, 18 but the energy is very limited because of the small capacitance value, greatly reducing the explosion proof demands of the overall system. Additionally, the faulty AC/DC power converter bridge 16, 18 is automatically isolated from the other AC/DC power converter bridges and from the common DC bus 12 by the diode 28, 30 in its split DC link. As a consequence, the system continues to operate with minor perturbation.

The capacitance values of the small capacitors 20, 22 are selected so as to allow just sufficient flow of normal mode instantaneous current in the AC/DC power converter bridges 16, 18 without extreme voltage decay at output terminals of AC/DC power converter bridges 16, 18. The normal mode instantaneous current here refers to the instantaneous current during the normal operation of the AC/DC power converter bridges 16, 18 flowing between the AC/DC power converter bridges and the small capacitors 20, 22. In one embodiment, the ratio of capacitance values of the large capacitors 24, 26 to the capacitance values of the small capacitors 20, 22 is more than 10.

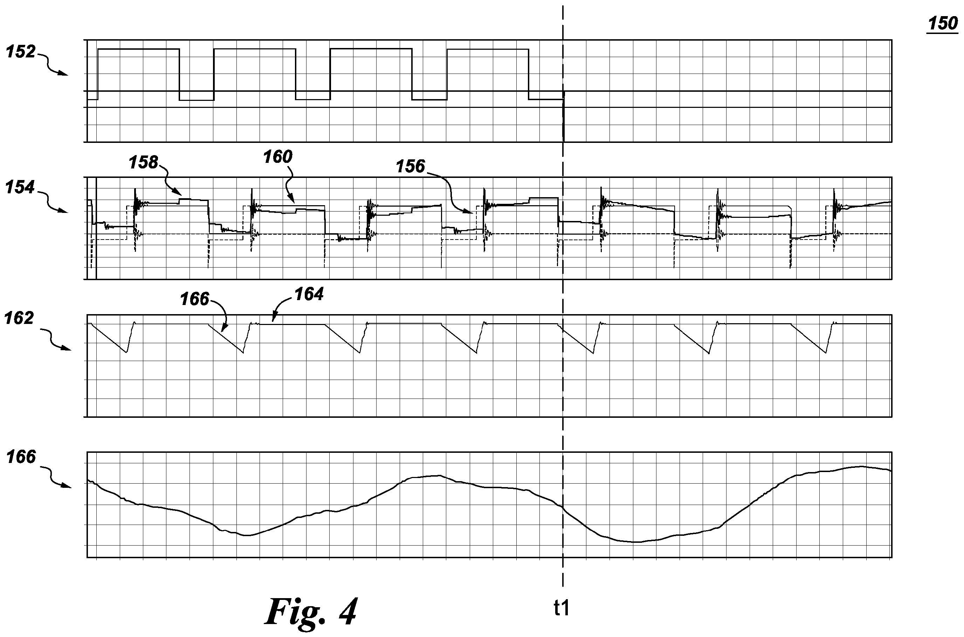

Referring now to FIG. 4, a graphical diagram 150 illustrating simulation plots of the DC power system of FIG. 2 in accordance with an embodiment of the present technique is depicted. The plots shown are for a simulated short circuit fault on AC/DC power converter bridge 16 at time t1. In FIG. 4, plot 152 shows a current i1 (FIG. 2) flowing in the split DC link 32 at a terminal of the AC/DC power converter bridge 16. As can be seen, the current i1 is positive for most of the time and it is negative for a shorter period. Therefore, the average value of the current i1 is positive. Furthermore, at time t1, when the short circuit fault occurs, there is a negative spike in the current i1. However, the current spike is very limited because of the low capacitance value of the capacitor 20. The capacitor 20 discharges completely within a moment of time and thereafter the current i1 becomes zero as shown in plot 152.

Furthermore, plot 154 in FIG. 4 shows various currents related to the non-faulty AC/DC power converter bridge 18. Plot 154 shows a current signal 156 which represents a current i2 through the small capacitor 22; a current signal 158 which represents a current i3 after the diode 30; and a current signal 160 which represents a current i4 after the large capacitor 26. Even after the fault at time t1 in the AC/DC power converter bridge 16, the non-faulty AC/DC power converter bridge 18 operates normally and without major disturbance.

Plot 162 in FIG. 4 shows, a voltage signal 164 representing a voltage of the common DC bus 12 and a voltage signal 166 representing a voltage across the small capacitor 22 for the non-faulty AC/DC power converter bridge 18. The DC bus voltage 164 continues to remain constant even after the fault at time t1. Similarly, there is not a significant difference to voltage 166 across the small capacitor 22. Furthermore, plot 166 shows a voltage ripple in the voltage of the DC bus 12 which also does not have significant variation after fault at time t1. In general, the present technique facilitates continuity of operation of DC power system without any major disturbance even after a short circuit fault in one of the AC/DC power converter bridges.

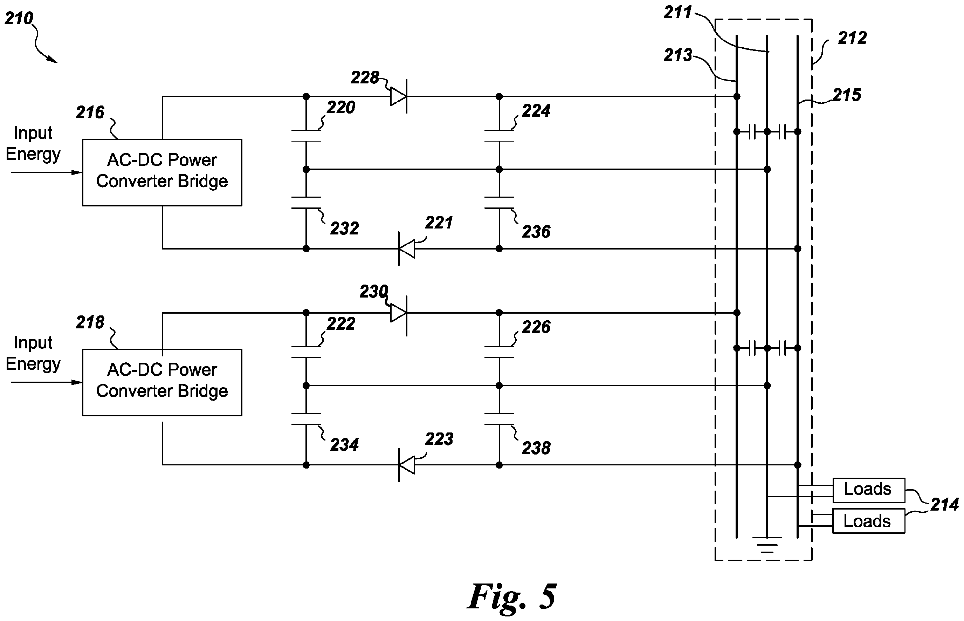

FIG. 5 illustrates a schematic diagram of another DC power system 210 in accordance with aspects of the present disclosure. The DC power system 210 includes a common DC bus 212 to which a plurality of loads 214 are connected. The common DC bus 212 includes a positive rail 213, a negative rail 215, and a ground rail 211. The ground rail potential is in between the positive rail potential and the negative rail potential. Some loads may be connected between the positive rail 213 and the ground rail 211 whereas some loads may be connected between the ground rail 211 and the negative rail 215. Furthermore, some loads may also be connected between the positive rail 213 and the negative rail 215. The DC power system 210 further includes a plurality of AC/DC power converter bridges 216, 218.

The DC power system 210 shown in FIG. 5 also includes small capacitors 220, 232, 222, 234 and large capacitors 224, 236, 226 and 238 as in FIG. 2. It should be noted that although, the capacitors are shown to be connected between the ground rail and the positive or negative rail, in other embodiments, the capacitors may be connected directly between the positive rail and the negative rail. As in the embodiment of FIG. 2, the large capacitors 224, 236, 226, 238 are connected to the AC/DC power converter bridges 216, 218 via uncontrolled semiconductor switches such as diodes 228, 230 respectively. However, unlike the embodiment of FIG. 2, large capacitors 224, 236, 226, 238 are also connected to the AC/DC power converter bridges 216, 218 via reverse connected diodes 221 and 223 as shown in FIG. 5. Since in FIG. 5, the loads are connected between various rails, e.g., the ground rail and the negative rail or the ground rail and the positive rail, a current may flow between the common DC bus 212 to the AC/DC power converter bridges 216, 218 via either the negative rail 215 or the positive rail 213. Thus, in such cases, reverse connected diodes 221, 223 block discharge of current from the AC/DC power converter bridges 216, 218 to the DC bus 212 and forward connected diodes 228, 230 block discharge of current from the DC bus 212 to the AC/DC power converter bridges 216, 218 during a fault. Therefore, the common DC bus 212 is completely isolated from the AC/DC power converter bridges 216, 218. FIG. 5 shows that each split DC link includes a positive rail that is connected between one of the output terminals of the respective AC/DC power converter bridge 216, 218 and the positive rail 213 of the DC bus 212, a negative rail that is connected between the other one of the output terminals of the respective AC/DC power converter bridge 216, 218 and the negative rail 215 of the DC bus 212, and a ground rail that is connected to the ground rail 211 of the DC bus 212. The split DC links are connected to the DC bus 212 in parallel. The small capacitors 220, 222 are coupled between the positive and ground rails, the small capacitors 232, 234 are coupled between the ground and negative rails, the large capacitors 224, 226 are coupled between the positive and ground rails, and the large capacitors 236, 238 are coupled between the ground and negative rails.

One of the advantages of the present system is high system availability via a more fault tolerant conversion structure based on splitting of the DC link of power converters. The system minimizes components and creates isolation between a common DC bus and faulty power converter. Another advantage of the system is that it limits damages to faulty power converters.

While only certain features of the invention have been illustrated and described herein, many modifications and changes will occur to those skilled in the art.

## Claims

1. A direct current (DC) power system (10; 210) comprising:
a common DC bus (12; 212) including at least a positive rail (13; 213) configured to supply power to a plurality of loads (14; 214);
a plurality of alternating current (AC)/DC converter bridges (16, 18; 216, 218) supplying DC power to the common DC bus (12; 212), wherein each of the AC/DC converter bridges (16, 18; 216, 218) is connected to the common DC bus (12; 212) by a split DC link (32, 34);
wherein each split DC link (32, 34) includes:
at least one first capacitor (20, 22; 220, 222, 232, 234) connected across DC output terminals of the respective AC/DC converter bridge (16, 18; 216, 218);
at least one second capacitor (24, 26; 224, 226, 236, 238) connected across the split DC link (32; 34); and
at least one diode (28, 30; 228, 230) connected between the at least one first capacitor (20, 22; 220, 222) and the at least one second capacitor (24, 26; 224, 226) to block an instantaneous current flow from the common DC bus (12; 212) to the respective AC/DC converter bridge (16, 18; 216, 218) in case of a fault in the AC/DC converter bridge;
wherein the capacitance value of the at least one second capacitor (24, 26; 224, 226) is more than 10 times the capacitance value of the at least one first capacitor (20, 22; 220, 222).

2. A DC power system (10; 210) according to claim 1, wherein the common DC bus (12; 212) further includes a ground rail (211) or a negative rail (15; 215) or both.

3. A DC power system (10; 210) according to claim 2, wherein a plurality of DC capacitors (17) are connected between the positive rail (13; 213) and the negative rail (15; 215) or between the positive rail (213) and the ground rail (211) or between the negative rail (215) and the ground rail (211).

4. A DC power system (210) according to any preceding claim, wherein the at least one diode (228, 230) is connected between a first terminal of the at least one first capacitor (220, 222) and a first terminal of the at least one second capacitor (224, 226); and wherein each split DC link further comprises at least one second diode (221, 223) connected between a second terminal of the at least one first capacitor (232, 234) and a second terminal of the at least one second capacitor (236, 238).

5. A DC power system (10; 210) according to any preceding claim, wherein each AC/DC converter bridge (16, 18; 216, 218) receives input energy from an AC generator or a power grid.

6. A method of supplying direct current (DC) power comprising:
providing DC power to a plurality of loads (14; 214) via a common DC bus (12; 212);
connecting a plurality of alternating current (AC)/DC converter bridges (16, 18; 216, 218) to the common DC bus (12; 212) by providing a split DC link (32, 34) between each of the AC/DC converter bridges (16, 18; 216, 218) and the common DC bus (12; 212);
wherein providing each split DC link (32, 34) includes:
connecting at least one first capacitor (20, 22; 220, 222, 232, 234) across DC output terminals of a respective AC/DC converter bridge (16, 18; 216, 218);
connecting at least one second capacitor (24, 26; 224, 226, 236, 238) across the split DC link (32; 34), wherein the capacitance value of the at least one second capacitor (24, 26; 224, 226) is more than 10 times the capacitance value of the at least one first capacitor (20, 22; 220, 222); and
coupling at least one diode (28, 30; 228, 230) between the at least one first capacitor (20, 22; 220, 222) and the at least one second capacitor (24, 26; 224, 226) to block an instantaneous current flow from the common DC bus (12; 212) to the respective AC/DC converter bridge (16, 18; 216, 218) in case of a fault in the AC/DC converter bridge.

7. A method according to claim 6, wherein providing DC power to a plurality of loads (14; 214) comprises receiving AC energy from AC generators or a power grid at each of the AC/DC power converter bridges (16, 18; 216, 218).

8. A method according to claim 6 or claim 7, wherein the capacitance value of the at least one first capacitor (20, 22; 220, 222, 232, 234) is selected to allow just sufficient flow of a normal mode instantaneous current in the respective AC/DC converter bridge (16, 18; 216, 218) without extreme voltage decay at the DC output terminals of the AC/DC converter bridge (16, 18; 216, 218) during normal operation of the AC/DC converter bridge.

9. A method according to any of claims 6 to 8, wherein providing the split DC link comprises connecting at least one second diode (221, 223) between the at least one first capacitor (232, 234) and the at least one second capacitor (236, 238).

10. A method according to any of claims 6 to 9, wherein providing DC power to the plurality of loads (14; 214) comprises providing a positive rail (13; 213) in the common DC bus (12; 212).

11. A method according to claim 10, further comprising providing a negative rail (215) or a ground rail (211) or both in the common DC bus (212).

12. A method according to claim 11, wherein providing DC power to a plurality of loads (14; 214) comprises coupling a plurality of DC capacitors (17) between the positive rail (13; 213) and the negative rail (15; 215) or between the positive rail (213) and the ground rail (211) or between the negative rail (215) and the ground rail (211) of the common DC bus (12; 212).

13. A method according to claim 11 or claim 12, wherein providing DC power to the plurality of loads (14; 214) comprises connecting the plurality of loads (14; 214) between the positive rail (13; 213) and the negative rail (15; 215) or between the positive rail (213) and the ground rail (211) or between the negative rail (215) and the ground rail (211).

## Patentansprüche

1. Gleichstrom(DC)-Energiesystem (10; 210), das aufweist:
einen gemeinsamen DC-Bus (12; 212), der wenigstens eine positive Schiene (13; 213) enthält, die eingerichtet ist, um Leistung zu mehreren Lasten (14; 214) zu liefern;
mehrere Wechselstrom(AC)/DC-Wandlerbrücken (16, 18; 216, 218), die DC-Leistung dem gemeinsamen DC-Bus (12; 212) zuführen, wobei jede der AC/DC-Wandlerbrücken (16, 18; 216, 218) mit dem gemeinsamen DC-Bus (12; 212) über einen geteilten DC-Zwischenkreis (32, 34) verbunden ist;
wobei jeder geteilte DC-Zwischenkreis (32, 34) enthält:
wenigstens einen ersten Kondensator (20, 22; 220, 222, 232, 234), der über DC-Ausgangsanschlüsse der jeweiligen AC/DC-Wandlerbrücke (16, 18; 216, 218) angeschlossen ist;
wenigstens einen zweiten Kondensator (24, 26; 224, 226, 236, 238), der über den geteilten DC-Zwischenkreis (32; 34) angeschlossen ist; und
wenigstens eine Diode (28, 30; 228, 230), die zwischen dem wenigstens einen ersten Kondensator (20, 22; 220, 222) und dem wenigstens einen zweiten Kondensator (24, 26; 224, 226) angeschlossen ist, um einen momentanen Stromfluss von dem gemeinsamen DC-Bus (12; 212) zu der jeweiligen AC/DC-Wandlerbrücke (16, 18; 216, 218) im Falle eines Fehlers in der AC/DC-Wandlerbrücke zu sperren;
wobei der Kapazitätswert des wenigstens einen zweiten Kondensators (24, 26; 224, 226) mehr als das 10-fache des Kapazitätswertes des wenigstens einen ersten Kondensators (20, 22; 220, 222) beträgt.

2. DC-Energiesystem (10; 210) nach Anspruch 1, wobei der gemeinsame DC-Bus (12; 212) ferner eine Erdungsschiene (211) oder eine negative Schiene (15; 215) oder beide enthält.

3. DC-Energiesystem (10; 210) nach Anspruch 2, wobei mehrere DC-Kondensatoren (17) zwischen der positiven Schiene (13; 213) und der negativen Schiene (15; 215) oder zwischen der positiven Schiene (213) und der Erdungsschiene (211) oder zwischen der negativen Schiene (215) und der Erdungsschiene (211) angeschlossen sind.

4. DC-Energiesystem (210) nach einem beliebigen vorhergehenden Anspruch, wobei die wenigstens eine Diode (228, 230) zwischen einem ersten Anschluss des wenigstens einen ersten Kondensators (220, 222) und einem ersten Anschluss des wenigstens einen zweiten Kondensators (224, 226) angeschlossen ist; und wobei jeder geteilte DC-Zwischenkreis ferner wenigstens eine zweite Diode (221, 223) aufweist, die zwischen einem zweiten Anschluss des wenigstens einen ersten Kondensators (232, 234) und einem zweiten Anschluss des wenigstens einen zweiten Kondensators (236, 238) angeschlossen ist.

5. DC-Energiesystem (10; 210) nach einem beliebigen vorhergehenden Anspruch, wobei jede AC/DC-Wandlerbrücke (16, 18; 216, 218) Eingangsenergie von einem AC-Generator oder einem Energienetz empfängt.

6. Verfahren zur Gleichstrom(DC)-Energieversorgung, das aufweist:
Zuführen von DC-Leistung zu mehreren Lasten (14; 214) über einen gemeinsamen DC-Bus (12; 212);
Anschließen mehrerer Wechselstrom(AC)/DC-Wandlerbrücken (16, 18; 216, 218) an den gemeinsamen DC-Bus (12; 212) durch Bereitstellung eines geteilten DC-Zwischenkreises (32, 34) zwischen jeder der AC/DC-Wandlerbrücken (16, 18; 216, 218) und dem gemeinsamen DC-Bus (12; 212);
wobei das Bereitstellen jedes geteilten DC-Zwischenkreises (32, 34) enthält:
Anschließen wenigstens eines ersten Kondensators (20, 22; 220, 222, 232, 234) über DC-Ausgangsanschlüsse einer jeweiligen AC/DC-Wandlerbrücke (16, 18; 216, 218);
Anschließen wenigstens eines zweiten Kondensators (24, 26; 224, 226, 236, 238) über den geteilten DC-Zwischenkreis (32; 34), wobei der Kapazitätswert des wenigstens einen zweiten Kondensators (24, 26; 224, 226) mehr als das 10-fache des Kapazitätswertes des wenigstens einen ersten Kondensators (20, 22; 220, 222) beträgt; und
Schalten wenigstens einer Diode (28, 30; 228, 230) zwischen dem wenigstens einen ersten Kondensator (20, 22; 220, 222) und dem wenigstens einen zweiten Kondensator (24, 26; 224, 226), um einen momentanen Stromfluss von dem gemeinsamen DC-Bus (12; 212) zu der jeweiligen AC/DC-Wandlerbrücke (16, 18; 216, 218) im Falle eines Fehlers in der AC/DC-Wandlerbrücke zu sperren.

7. Verfahren nach Anspruch 6, wobei das Zuführen von DC-Leistung zu mehreren Lasten (14; 214) ein Empfangen von AC-Energie von AC-Generatoren oder einem Energienetz an jeder der AC/DC-Leistungswandlerbrücken (16, 18; 216, 218) aufweist.

8. Verfahren nach Anspruch 6 oder Anspruch 7, wobei der Kapazitätswert des wenigstens einen ersten Kondensators (20, 22; 220, 222, 232, 234) ausgewählt ist, um einen gerade ausreichenden Fluss eines momentanen Stromes im normalen Betriebsmodus in der jeweiligen AC/DC-Wandlerbrücke (16, 18; 216, 218) ohne einen extremen Spannungsabfall an den DC-Ausgangsanschlüssen der AC/DC-Wandlerbrücke (16, 18; 216, 218) während eines normalen Betriebs der AC/DC-Wandlerbrücke zu ermöglichen.

9. Verfahren nach einem beliebigen der Ansprüche 6 bis 8, wobei das Bereitstellen des geteilten DC-Zwischenkreises ein Anschließen wenigstens einer zweiten Diode (221, 223) zwischen dem wenigstens einen ersten Kondensator (232, 234) und dem wenigstens einen zweiten Kondensator (236, 238) aufweist.

10. Verfahren nach einem beliebigen der Ansprüche 6 bis 9, wobei das Zuführen von DC-Leistung zu den mehreren Lasten (14; 214) ein Bereitstellen einer positiven Schiene (13; 213) in dem gemeinsamen DC-Bus (12; 212) aufweist.

11. Verfahren nach Anspruch 10, das ferner ein Bereitstellen einer negativen Schiene (215) oder einer Erdungsschiene (211) oder von beiden in dem gemeinsamen DC-Bus (12; 212) aufweist.

12. Verfahren nach Anspruch 11, wobei das Zuführen von DC-Leistung zu mehreren Lasten (14; 214) ein Schalten mehrerer DC-Kondensatoren (17) zwischen der positiven Schiene (13; 213) und der negativen Schiene (15; 215) oder zwischen der positiven Schiene (213) und der Erdungsschiene (211) oder zwischen der negativen Schiene (215) und der Erdungsschiene (211) des gemeinsamen DC-Buses (12; 212) aufweist.

13. Verfahren nach Anspruch 11 oder Anspruch 12, wobei das Zuführen von DC-Leistung zu den mehreren Lasten (14; 214) ein Anschließen der mehreren Lasten (14; 214) zwischen der positiven Schiene (13; 213) und der negativen Schiene (15; 215) oder zwischen der positiven Schiene (213) und der Erdungsschiene (211) oder zwischen der negativen Schiene (215) und der Erdungsschiene (211) aufweist.

## Revendications

1. Système électrique à courant continu (CC) (10 ; 210), comprenant :
un bus CC commun 12 ; 212), comportant au moins un rail positif (13 ; 213), configuré pour fournir du courant à une pluralité de charges (14 ; 214) ;
une pluralité de ponts de conversion (16, 18 ; 216, 218) de courant alternatif (CA) / CC, qui fournissent du courant CC au bus CC commun (12; 212) en courant continu, dans lequel chacun des ponts de conversion (16, 18 ; 216, 218) CA / CC est relié au bus CC commun (12 ; 212) par une liaison CC séparée (32, 34) ;
dans lequel chaque liaison CC séparée (32, 34) comporte :
au moins un premier condensateur (20, 22 ; 220, 222, 232, 234), relié à travers des bornes de sortie CC du pont de conversion CA / CC (16, 18 ; 216, 218) respectif ;
au moins un second condensateur (24, 26 ; 224, 226, 236, 238), relié à travers la liaison CC séparée (32 ; 34) et
au moins une diode (28, 30 ; 228, 230), reliée entre le au moins un premier condensateur (20, 22 ; 220, 222) et le au moins un second condensateur (24, 26 ; 224, 226), pour bloquer une circulation instantanée de courant depuis le bus CC commun (12 ; 212) vers le pont de conversion CA / CC (16, 18 ; 216, 218) respectif en cas de défaut dans le pont de conversion CA / CC ;
dans lequel la valeur de capacité du au moins un second condensateur (24, 26 ; 224, 226) est supérieure à 10 fois la valeur de capacité du au moins un premier condensateur (20, 22 ; 220, 222).

2. Système électrique CC (10 ; 210) selon la revendication 1, dans lequel le bus CC commun (12 ; 212) comporte en outre un rail de masse (211) ou un rail négatif (15 ; 215) ou les deux.

3. Système électrique CC (10 ; 210) selon la revendication 2, dans lequel une pluralité de condensateurs CC (17) est reliée entre le rail positif (13 ; 213) et le rail négatif (15 ; 215) ou entre le rail positif (213) et le rail de masse (211) ou entre le rail négatif (215) et le rail de masse (211).

4. Système électrique CC (210) selon l'une quelconque des revendications précédentes, dans lequel la au moins une diode (228, 230) est reliée entre une première borne du au moins un premier condensateur (220, 222) et une première borne du au moins un second condensateur (224, 226) et dans lequel chaque liaison CC séparée comprend en outre au moins une seconde diode (221, 223), reliée entre une seconde borne du au moins un premier condensateur (232, 234) et une seconde borne du au moins un second condensateur (236, 238).

5. Système électrique CC (10 ; 210) selon l'une quelconque des revendications précédentes, dans lequel chaque pont de conversion CA / CC (16, 18 ; 216, 218) reçoit de l'énergie d'alimentation depuis une génératrice de CA ou un réseau électrique.

6. Procédé d'alimentation en puissance en courant continu (CC), comprenant les opérations, consistant à :
fournir de la puissance en CC à une pluralité de charges (14 ; 214) par l'intermédiaire d'un bus CC commun (12 ; 213) ;
relier une pluralité de ponts de conversion de courant alternatif (CA) / CC (16, 18; 216, 218) au bus CC commun (12 ; 212), en prévoyant une liaison CC séparée (32, 34) entre chacun des ponts de conversion CA / CC (16, 18 ; 216, 218) et le bus CC commun (12 ; 212) ;
dans lequel l'opération, consistant à prévoir chaque liaison CC séparée (32, 34), comporte les opérations, consistant à :
relier au moins un premier condensateur (20, 22 ; 220, 222, 232, 234) à travers des bornes de sortie CC d'un pont de conversion CA / CC (16, 18 ; 216, 218) respectif ;
relier au moins un second condensateur (24, 26 ; 224, 226, 236, 238) à travers la liaison CC séparée (32 ; 34), dans lequel la valeur de capacité du au moins un second condensateur (24, 26 ; 224, 226) est supérieure à 10 fois la valeur de capacité du au moins un premier condensateur (20, 22, 220, 222) et
coupler au moins une diode (28, 30 ; 228, 230) entre le au moins un premier condensateur (20, 22, 220, 222) et le au moins un second condensateur (24, 26 ; 224, 226), pour bloquer une circulation instantanée de courant depuis le bus CC commun (12 ; 212) vers le pont de conversion CA / CC (16, 18 ; 216, 218) respectif en cas de défaut dans le pont de conversion CA / CC.

7. Procédé selon la revendication 6, dans lequel la fourniture de puissance en CC à une pluralité de charges (14 ; 214) comprend l'opération, consistant à recevoir de l'énergie CA de génératrices CA ou d'un réseau électrique à chacun des ponts de conversion de courant CA / CC (16, 18 ; 216, 218).

8. Procédé selon la revendication 6 ou la revendication 7, dans lequel la valeur de capacité du au moins un premier condensateur (20, 22, 220, 222, 232, 234) est sélectionnée pour permettre une circulation juste suffisante d'un courant instantané en mode normal dans le pont de conversion CA / CC (16, 18 ; 216, 218) respectif, sans diminution extrême de la tension aux bornes de sortie CC du pont de conversion CA / CC (16, 18 ; 216, 218) durant un fonctionnement normal du pont de conversion CA / CC.

9. Procédé selon l'une quelconque des revendications 6 à 8, dans lequel la prévision de la liaison CC séparée comprend l'opération, consistant à relier au moins une seconde diode (221, 223) entre le au moins un premier condensateur (232, 234) et le au moins un second condensateur (236, 238).

10. Procédé selon l'une quelconque des revendications 6 à 9, dans lequel la fourniture de puissance en CC à la pluralité de charges (14 ; 214) comprend l'opération, consistant à fournir un rail positif (13 ; 213) dans le bus CC commun (12 ; 212).

11. Procédé selon la revendication 10, comprenant en outre l'opération, consistant à prévoir un rail négatif (215) ou un rail de masse (211) ou les deux dans le bus CC commun (212).

12. Procédé selon la revendication 11, dans lequel la fourniture de puissance en CC à une pluralité de charges (14 ; 214) comprend l'opération, consistant à coupler une pluralité de condensateurs CC (17) entre le rail positif (13 ; 213) et le rail négatif (15 ; 215) ou entre le rail positif (213) et le rail de masse (211) ou entre le rail négatif (215) et le rail de masse (211) du bus CC commun (12 ; 212).

13. Procédé selon la revendication 11 ou la revendication 12, dans lequel la fourniture de puissance en CC à la pluralité de charges (14 ; 214) comprend l'opération, consistant à relier la pluralité de charges (14 ; 214) entre le rail positif (13 ; 213) et le rail négatif (15 ; 215) ou entre le rail positif (213) et le rail de masse (211) ou entre le rail négatif (215) et le rail de masse (211).
